# DEMANDE DE BREVET EUROPEEN

(11) **EP 0 826 305 A1**
(43) Date de publication de la demande: **04.03.1998**
(21) Numéro de dépôt: 96202355.2
(22) Date de dépôt: 26.08.1996
(51) Int. Cl.: A21D 8/02, A21D 15/02, A21D 13/08, A21D 8/04

(54) **Pâte levée non fermentée**

(71) Demandeur: SOCIETE DES PRODUITS NESTLE S.A., 1800 Vevey (CH)
(72) Inventeur: Ferrari-Philippe, Fabiana, 60000 Beauvais (FR); Harlaux, Ginette, 60000 Beauvais (FR); Penet, Sylvie, 60430 Warluis (FR)
(74) Mandataire: Wavre, Claude-Alain

(57) **Abrégé**

Procédé de préparation d'une pâte levée non fermentée dans lequel on mélange à température ambiante une composition contenant, pour 1 kg de farine, 10-40 g de sel, 5-50 g de poudre levante, 0-350 g d'oeufs, 10-700 g de matière grasse, 50-150 g de protéines lactiques, 5-30 g d'un agent de fermentation inactivé et 400-800 g d'eau, de manière à obtenir une pâte, on cuit cette pâte, puis on la stocke à une température de -40° C à +10° C.

## Description

La présente invention a pour objet un procédé de préparation d'une pâte levée non fermentée.

Traditionnellement, les pâtes levées, riches en matière grasse, type pain de mie, brioche ou croissant, sont levées par fermentation à la levure boulangère. Ces pâtes sont souvent fabriquées avec des cycles de fermentation longs en plusieurs étapes, de manière à donner une bonne texture aérée à la pâte.

J.L Kiger et al. (Techniques modernes de la biscuiterie, pâtisserie - boulangerie industrielles et artisanales et des produits de régime - tome 2, p 381-382, coll. DUNOD, 1968) décrit une préparation de la pâte à brioche, dans laquelle le levain est réalisé avec de la levure boulangère délayée dans de la farine et un peu d'eau tiède, puis levé pendant 15 min à 30-35° C, le restant de farine, le sel, le sucre, les oeufs et l'eau ou le lait sont mélangés en une pâte souple, pétrie vigoureusement et à laquelle est incorporé le beurre par petites quantités. Le levain est alors ajouté à la pâte qui est encore un peu travaillée puis levée une première fois pendant 2 à 3h à température ambiante, avant d'être rompue et levée une seconde fois toute une nuit à 6° C. La pâte est alors rompue, façonnée dans un moule, levée pendant 30 min à température ambiante puis cuite dans un four conventionnel à température relativement élevée.

Par ailleurs, Garnier (Pains et viennoiseries recettes et techniques, p 97 - Edt Dormonval, 1992) décrit une préparation de la pâte type pain de mie, dans laquelle la farine, le sel, le sucre, la poudre de lait et la levure boulangère, préalablement délayée dans un peu d'eau et de farine, sont travaillés, de manière à obtenir une pâte lisse, à laquelle est ajouté le beurre. La pâte est ensuite levée pendant 20 min à température ambiante, avant d'être façonnée dans un moule et levée une seconde fois pendant 60 min à température ambiante. La pâte type pain de mie ainsi préparée est finalement cuite dans un four conventionnel à température relativement élevée.

La présente invention a pour but de proposer un procédé de préparation d'une pâte levée non fermentée présentant des propriétés physiques et des qualités organoléptiques semblables à celles des pâtes levées traditionnelles. Ce procédé a l'avantage d'être simple et rapide, du fait qu'il n'implique aucune étape de levée de la pâte. De plus, il permet de réaliser une pâte stockable à basses températures et pouvant, notamment, être réchauffée aux micro-ondes, tout en gardant une texture moelleuse.

A cet effet, dans le procédé de préparation d'une pâte levée non fermentée selon la présente invention, on mélange à température ambiante une composition contenant, pour 1 kg de farine, 10-40 g de sel, 5-50 g de poudre levante, 0-350 g d'oeufs, 10-700 g de matière grasse, 50-150 g de protéines lactiques, 5-30 g d'un agent de fermentation inactivé et 400-800 g d'eau, de manière à obtenir une pâte, on cuit cette pâte, puis on la stocke à une température de -40° C à +10° C.

On a constaté avec surprise que le procédé de préparation selon la présente invention, bien que n'impliquant aucune étape de levée de la pâte, permet de réaliser une pâte levée dont l'aspect doré et la texture croustillante en surface, la texture bien alvéolée et moelleuse à l'intérieur, ainsi que le goût et l'arôme sont semblables à ceux des pâtes levées traditionnelles.

Dans la suite de la description, on emploiera l'expression "plat cuisiné" notamment pour désigner des snacks ou des entremets.

Enfin, dans la suite de la description, on emploiera l'expression "levure lactique" pour désigner des levures de type *Saccharomyces kluyveromyces lactis* ou des levures de type *Saccharomyces kluyveromyces fragilis* ayant poussées sur un milieu de culture lactique, tel que le lait dégraissé et déprotéiné.

Dans le procédé de préparation d'une pâte levée non fermentée selon la présente invention, on mélange donc à température ambiante une composition contenant, pour 1 kg de farine, 10-40 g de sel, 5-50 g de poudre levante, 0-350 g d'oeufs, 10-700 g de matière grasse, 50-150 g de protéines lactiques, 5-30 g d'un agent de fermentation inactivé et 400-800 g d'eau, de manière à obtenir une pâte. On peut mélanger cette composition dans un pétrin planétaire, notamment celui commercialisé par Hobart, 1, Allée du 1er Mai, F-77312 MARNE LA VALLEE, dans un turbo-mixer, notamment celui commercialisé par Ystral, Wettelbrunnerstrasse 7, D-7801 BALLRECHTEN DOTTINGEN ou dans un pétrin classique de boulangerie, notamment celui commercialisé par ARTOFEX, 87 rue Cartier Bresson, F-93500 PANTIN.

La farine est de préférence de la farine de blé tendre, dont la teneur en gluten est de 7-13%, de manière à obtenir une pâte ayant une texture moelleuse. Elle peut être également un mélange de 5-20% de farine de mais ou de seigle et 80-95% de farine de blé tendre, par exemple.
Si la farine présente une teneur en gluten supérieur à 13%, la pâte réalisée présente une texture trop élastique lors de la réchauffe aux micro-ondes.

La matière grasse, qui améliore la texture moelleuse et légère de la pâte notamment lors de la réchauffe aux micro-ondes, peut être de l'huile de tournesol, de l'huile de soja' de l'huile d'olive, de l'huile d'arachide, de l'huile de palme, de l'huile de colza, du beurre ou de la margarine, par exemple.

Les protéines lactiques sont, de préférence, des protéines sériques qui jouent également un rôle dans l'élasticité de la pâte, permettant une meilleure rétention du CO₂ qui se forme à l'intérieur de la pâte, du fait de la présence de la poudre levante. De plus, elles jouent un rôle la coloration et la croustillance de la pâte en surface, lors de la réchauffe.

L'agent de fermentation inactivé est, de préférence, une levure boulangère inactivée thermiquement ou une levure lactique inactivée thermiquement. Il est déstiné, d'une part, à développer le goût caractéristique des pâtes levées et, d'autre part, à favoriser la formation d'une texture plus aérée, plus moelleuse de la pâte. En effet, il agit sur les ponts disulfures du gluten, en permettant une meilleure absorption d'eau et une meilleure relaxation du gluten et évite ainsi l'obtention d'une texture caoutchouteuse et un fort dessèchement de la pâte lors de la réchauffe aux micro-ondes.
L'agent de fermentation inactivé est donc une levure boulangère ou une levure lactique inactivées par un traitement thermique suffisant stoppant l'activité de fermentation puis séchées par atomisation. Il peut être notamment la levure boulangère inactivée thermiquement, commercialisée par Gist-Brocades N.V., Food Ingredient division, P.B. 01, NL-260 MA DELFT ou par Fould Springer, 103 rue Jean Jaures, F-94701 MAISON ALFORD ou la levure lactique inactivée thermiquement, commercialisée par Fromagerie Bel, 8, rue Penthièvre, F-75008 PARIS, par exemple.

La poudre levante, qui permet le développement de la texture alvéolée de la pâte non fermentée, peut être composée d'un agent dégageant du CO₂, tel que le bicarbonate de sodium, et d'un agent acidifiant, tel que le pyrophosphate de sodium ou le glucono delta lactone, par exemple.
Si l'on souhaite obtenir une pâte plus visqueuse et donc pompable, on utilise de préférence, conune agent acidifiant, le pyrophosphate de sodium.
Par contre, si l'on souhaite obtenir une pâte plus ferme, on utilise de préférence, comme agent acidifiant, le glucono delta lactone.

La composition peut contenir en plus, 30-100 g de polydextrose, de maltodextrine, de lactose en poudre ou de sucre, tel que le saccharose, par exemple.
De préférence pour fabriquer des plats cuisinés salés, on utilise le polydextrose qui ne développe pas sur le plan gustatif un goût sucré, comme un sucre classique, tel que le saccharose, mais dont l'action sur la texturation de la pâte est semblable à celle d'un sucre. On peut ainsi réaliser une pâte à la texture croustillante en surface et au goût peu sucré, par exemple.

On peut mélanger à température ambiante la composition selon la présente invention contenant 10-700 g de beurre ou de margarine ou l'on peut incorporer 10-700 g de beurre ou de margarine à la composition à la fin de l'étape de mélange, de manière à obtenir une pâte hétérogène contenant des couches de gras et l'on peut alors effectuer une étape de 1 à 10 pliages avant de cuire cette pâte, de manière à obtenir une pâte levée non fermentée de type croissant, par exemple.

On cuit donc la pâte. On peut la portionner en pâtons de 20-500 g, avant de la cuire, par exemple. On peut la cuire dans un four conventionnel à 200-250° C pendant 10-45 min ou dans un cuiseur à bandes à 190-225° C pendant 2-10 min, par exemple. On peut également la précuire dans un four conventionnel à 150-200° C pendant 7-20 min, puis la passer au gril à 220-260° C pendant 1-4 min ou aux infra-rouge pendant 3-45 s, par exemple.

On la stocke ensuite à une température de -40° C à +10° C. On peut la stocker au réfrigérateur, au congélateur ou la surgeler, par exemple.

Enfin, on la réchauffe, de préférence, aux micro-ondes pendant 20 s à 10 min, de manière à obtenir une pâte à la texture moelleuse prête à la consommation. On peut également la réchauffer dans un four conventionnel 150-220° C pendant 10-45 min ou dans un grille-pain pendant 1-2 min, par exemple.
On peut également consommer la pâte ainsi réalisée sans la réchauffer au préalable, par exemple.

Au cours du procédé, on peut ajouter à la pâte avant et/ou après l'étape de cuisson des morceaux de viande ou de poisson, une sauce, des légumes entiers et/ou en morceaux, du fromage, des fruits entiers et/ou en morceaux, des épices et/ou des céréales, par exemple.
On peut ajouter les morceaux de viande ou de poisson, les légumes entiers et/ou en morceaux ou les fruits entiers et/ou en morceaux, avant l'étape de cuisson, lors de l'étape de mélange de la composition, par exemple.
On peut ajouter la sauce, le fromage, les épices et/ou les céréales, avant et/ou après l'étape de cuisson, par exemple.

Si l'on souhaite réaliser un plat cuisiné salé, on peut ajouter à la pâte selon l'invention des morceaux de viande ou de poisson, une sauce, des légumes entiers et/ou en morceaux, du fromage, des épices et/ou des céréales, par exemple.
La viande peut être du boeuf, du poulet, de la dinde, du veau, du porc ou des produits de charcuterie, comme du jambon, de la saucisse ou du salami, par exemple.
Le poisson peut être du cabillaud, du saumon, de la sole ou du colin, par exemple.
On peut ajouter les morceaux de viande ou de poisson précuits ou à l'état cru, par exemple. On peut également ajouter la viande ou le poisson haché dans la sauce, par exemple.

Les légumes entiers et/ou en morceaux peuvent être des tomates, des poivrons,des champignons, des graines de mais, des oignons, des carottes, des petits pois, du céleri, des haricots, des pommes de terre ou des broccolis, par exemple.
On peut blanchir ou précuire les légumes entiers et/ou en morceaux avant de les ajouter à la pâte, par exemple. On peut également les ajouter sous forme de purée, par exemple.

Le fromage peut être du gruyère, de la mozzarella, du cheddar ou de l'emmenthal, par exemple.

La sauce peut être de la moutarde, du ketchup de la sauce tomate ou une sauce blanche, par exemple.

Les céréales peuvent être du riz ou de l'orge perlé que l'on peut précuire ou du sesame ou du pavot, par exemple.

Les épices peuvent être du poivre, du romarin, de la sauge, du gingembre, du thym, du piment ou du cumin, par exemple.

Si l'on souhaite réaliser un plat cuisiné sucré, on peut ajouter à la pâte selon l'invention, des fruits entiers et/ou en morceaux, une sauce, des épices et/ou des céréales, par exemple.

Les fruits peuvent être des pommes, des poires, des cerises, des ananas ou des abricots, par exemple

La sauce peut être une sauce à la vanille, une sauce au caramel ou une sauce au chocolat, par exemple.

Les épices peuvent être de la cannelle, de la vanille, par exemple.

Les céréales peuvent être du riz ou de l'orge perlé que l'on peut précuire, par exemple.

La présente invention a également pour objet le plat cuisiné, obtenu par la mise en oeuvre du présent procédé.

Le procédé selon la présente invention est décrit plus en détails dans les exemples non limitatifs ci-après. Dans ces exemples, les pourcentages et parties sont donnés en poids, sauf indications contraires.

### Exemple 1

A l'aide du procédé selon la présente invention, on réalise une tarte briochée.

Pour ce faire, on mélange, dans un pétrin planétaire, 1 kg de farine de blé tendre, 25 g de sel fin de cuisine, 68 g de polydextrose, 9 g de bicarbonate de sodium, 9 g de pyrophosphate, 27 g de levure inactivée thermiquement, 305 g d'oeufs, 193 g d'huile de tournesol, 614 g d'eau et 91 g de protéines sériques, de manière à obtenir une pâte homogène.

On portionne alors cette pâte en pâtons de 100 g que l'on étale dans des moules et l'on dispose sur ces fonds de pâte 10 g de poivrons blanchis coupés en cubes, 27 g de sauce tomate, 2,5 g d'oignons rissolés et 2 g d'aubergines coupées en cubes.

On cuit dans un four traditionnel à 220° C pendant 23 min ces tartes briochées que l'on saupoudre ensuite de 15 g de mozzarella.

On les stocke alors au congélateur.

Le consommateur peut disposer ainsi les tartes briochées sur un plat et les réchauffer aux micro-ondes pendant 3 min, sans qu'elles perdent de leur texture moelleuse.
Les tartes briochées ainsi réchauffées ont l'aspect doré et la texture croustillante en surface, la texture bien alvéolée et moelleuse à l'intérieur et un goût et un arôme semblables aux tartes briochées traditionnelles.

### Exemple 2

A l'aide du procédé selon la présente invention, on réalise des hot-dogs.

Pour ce faire, on mélange dans un pétrin planétaire, 1 kg de farine de blé tendre, 35 g de sel de cuisine, 15 g de bicarbonate de sodium, 33 g de glucono-delta-lactone, 15 g de levure inactivée thermiquement, 309 g d'oeufs, 195 g d'huile de tournesol, 576 g d'eau et 137 g de protéines sériques, de manière à obtenir une pâte homogène.

On dose alors cette pâte en portions de 60 g dans des moules et on y ajoute des saucisses type knack de 30 g, que l'on enrobe de 3,5 g de moutarde et de 6,5 g de ketchup, de manière à réaliser des hot-dogs.

On cuit les hot-dogs ainsi préparés dans un four traditionnel à 220° C pendant 20 min.

Puis, on les stocke au congélateur.

Le consommateur peut disposer ainsi les hot-dogs sur un plat et les réchauffer aux micro-ondes pendant 40 s, sans qu'ils perdent de leur texture moelleuse. Les hot-dogs ainsi réchauffés ont une pâte moelleuse et la surface bien croustillante semblables aux hot-dogs préparés traditionnellement.

### Exemple 3

A l'aide du procédé selon la présente invention, on prépare des petites brioches salées.

Pour ce faire, on mélange dans un turbo-mixer, 1 kg de farine de blé tendre, 22 g de sel de cuisine, 17 g de bicarbonate de sodium, 34 g de glucono-delta-lactone, 10 g de levure inactivée thermiquement, 170 g d'oeufs, 86 g d'huile de tournesol, 755 g d'eau et 137 g de protéines sériques, de manière à obtenir une pâte homogène.

On dose alors cette pâte en pâtons de 60 g que l'on cuit entre deux bandes téflonées (2 cm d'écartement) chauffées par résistances éléctriques pendant 3 min à 220° C.

On stocke alors les petites brioches salées ainsi réalisées au réfrigérateur.

Le consommateur peut disposer ainsi les petites brioches salées sur un plat et les réchauffer aux micro-ondes pendant 30 s, sans qu'elles perdent de leur texture moelleuse.

Les petites brioches salées ainsi réchauffées présentent, en surface, un aspect doré et une texture croustillante, ont la texture bien alvéolée et moelleuse à l'intérieur et un goût et un arôme semblables aux brioches traditionnelles.

### Exemple 4

On procède de la manière telle que décrite à l'exemple 3, à l'exception du fait que l'on ajoute 7 g de lardons dans la pâte avant l'étape de cuisson et que l'on saupoudre les petites brioches salées de 3 g de fromage rapé type emmenthal, après l'étape de cuisson.

On obtient ainsi des petite brioches salées, agrémentées de lardons et de fromage, que le consommateur peut disposer sur un plat et réchauffer aux micro-ondes pendant 60 s, sans qu'elles perdent de leur texture moelleuse.
Les petites brioches salées ainsi réchauffées présentent, en surface, un aspect doré et une texture croustillante, ont la texture bien alvéolée et moelleuse à l'intérieur et un goût et un arôme semblables aux brioches traditionnelles. Le fromage rapé saupoudré à la surface des petites brioches salées ainsi préparées accentue la texture croustillante.

### Exemple 5

A l'aide du procédé selon la présente invention, on prépare des tartes briochées aux abricots.

Pour ce faire, on mélange dans un pétrin planétaire, 1 kg de farine de blé tendre, 16 g de sel fin de cuisine, 70 g de saccharose, 9 g de bicarbonate de sodium, 18 g de glucono-delta-lactone, 25 g de levure inactivée thermiquement, 305 g d'oeufs, 193 g d'huile de tournesol, 614 g d'eau et 91 g de protéines sériques, de manière à obtenir une pâte homogène.

On dose alors cette pâte en portions de 60 g, que l'on dépose ensuite dans des moules à tarte.

On coule alors, sur les fonds de pâte, 25 g de crème patissière au citron et l'on dispose 10 g d'oreillons d'abricots.

On saupoudre d'amandes effilées la surface des tartes ainsi préparées.

On les cuit dans un four traditionnel à 215° C pendant 16 min.

Enfin, on les stocke au congélateur.

Le consommateur peut disposer ainsi les tartes briochées aux abricots sur un papier absorbant et les réchauffer aux micro-ondes pendant 70 s, sans qu'elles perdent de leur texture moelleuse.
Les tartes briochées aux abricots ainsi réchauffées ont l'aspect doré et la texture croustillante en surface, la texture bien alvéolée et moelleuse à l'intérieur et un goût et un arôme semblables aux tartes briochées traditionnelles.

### Exemple 6

A l'aide du procédé selon la présente invention, on prépare des chaussons aux abricots.

Pour ce faire, on mélange dans un pétrin classique de boulangerie, 1 kg de farine de blé tendre, 16 g de sel fin de cuisine, 10 g de saccharose, 17,5 g de bicarbonate de sodium, 3,4 g de glucono-delta-lactone, 15 g de levure inactivée thermiquement, 460 g d'eau et 71 g de protéines sériques, de manière à obtenir une pâte homogène. Puis, on incorpore à cette pâte 500 g de margarine, en petites quantités, de manière à obtenir une pâte hétérogène contenant des couches de gras.

On plie alors la pâte en 10 couches et on la découpe en morceaux de 40 g et de 3 mm d'épaisseur que l'on dépose sur des plaques de cuisson.

On dépose alors, sur les fonds de pâte, 25 g de crème patissière au citron et l'on dispose 10 g d'oreillons d'abricots, avant de replier la pâte, de manière à réaliser des chaussons aux abricots.

On badigeonne la face supérieur des chaussons ainsi préparé avec un jaune d'oeuf et on les saupoudre d'amandes effilées.

On les cuit ensuite dans un four traditionnel à 215° C pendant 16 min.

Enfin, on les stocke au congélateur.

Le consommateur peut disposer ainsi les chaussons aux abricots sur un papier absorbant et les réchauffer aux micro-ondes pendant 70 s, sans qu'ils perdent de leur texture moelleuse.
Les chaussons aux abricots ainsi réchauffés ont l'aspect doré et la texture croustillante en surface, la texture feuilletée, bien alvéolée et moelleuse à l'intérieur et un goût et un arôme semblables aux chaussons aux fruits traditionnelles.

## Revendications

1. Procédé de préparation d'une pâte levée non fermentée dans lequel:
- on mélange à température ambiante une composition contenant, pour 1 kg de farine, 10-40 g de sel, 5-50 g de poudre levante, 0-350 g d'oeufs, 10-700 g de matière grasse, 50-150 g de protéines lactiques, 5-30 g d'un agent de fermentation inactivé et 400-800 g d'eau, de manière à obtenir une pâte,
- on cuit cette pâte,
- puis on la stocke à une température de -40° C à +10° C.

2. Procédé selon la revendication 1, dans lequel la composition contient en plus 30-100 g de polydextrose, de maltodextrine, de lactose ou de sucre.

3. Procédé selon la revendication 1, dans lequel on effectue une étape de 1 à 10 pliages avant de cuire la pâte.

4. Procédé selon la revendication 1, dans lequel on réchauffe la pâte aux micro-ondes.

5. Procédé selon la revendication 1, dans lequel l'agent de fermentation inactivé est me levure boulangère inactivée thermiquement ou une levure lactique inactivée thermiquement.

6. Procédé selon la revendication 1, dans lequel on ajoute à la pâte avant et/ou après l'étape de cuisson des morceaux de viande ou de poisson, une sauce, des légumes ou des fruits entiers et/ou en morceaux, du fromage, des épices et/ou des céréales.

7. Plat cuisiné obtenu par la mise en oeuvre du procédé selon l'une des revendications 1 à 6.
